# EUROPÄISCHE PATENTSCHRIFT

(11) **EP 0 764 192 B1**
(45) Veröffentlichungstag und Bekanntmachung des Hinweises auf die Patenterteilung: **12.08.1998**
(21) Anmeldenummer: 95921779.5
(22) Anmeldetag: 30.05.1995
(51) Int. Cl.: C09J 4/00

(54) **EINKOMPONENTIGER REAKTIONSKLEBSTOFF**
SINGLE-COMPONENT REACTION ADHESIVE
ADHESIF DE REACTION A UN COMPOSANT

(30) Priorität: 09.06.1994 DE 4420151
(43) Veröffentlichungstag der Anmeldung: 26.03.1997
(73) Patentinhaber: Henkel Kommanditgesellschaft auf Aktien, 40191 Düsseldorf (DE)
(72) Erfinder: HUVER, Thomas, D-40625 Düsseldorf (DE); FISCHER, Herbert, D-40229 Düsseldorf (DE); KLAUCK, Wolfgang, D-40670 Meerbusch (DE); BOLTE, Gerd, D-40789 Monheim (DE)
(86) Internationale Anmeldenummer: EP9502047
(87) Internationale Veröffentlichungsnummer: WO9533800

(56) Entgegenhaltungen:
- EP-A- 0 078 994
- EP-A- 0 261 409
- EP-A- 0 356 875
- EP-A- 0 502 733
- EP-A- 0 611 813
- WO-A-95/07304

## Beschreibung

Die Erfindung betrifft einen einkomponentigen Reaktionsklebstoff auf der Basis eines aeroben Klebstoffes.

Aerobe Klebstoffe sind bekannt. So werden z.B. in den DE 38 29 438 und DE 38 29 461 ethylenisch ungesättigte polymerisierbare Verbindungen beschrieben, die aufgrund der Gegenwart eines bestimmten Aktivatorsystems bei Zutritt von Sauerstoff polymerisieren. Das Aktivatorsystem besteht aus N-Alkyl-substituierten tertiären Arylaminen mit wenigstens einer α-ständigen aliphatischen CH-Bindung, z.B. Dimethylanilin oder Dimethyl-p-toluidin, einer im System löslichen Metallverbindung für die Trockenbeschleunigung ungesättigter Öle sowie einer Carbonsäure mit einem pKs-Wert von 0,9 bis 7. Bevorzugte Trockenstoffe sind Metallverbindungen, die in mehreren Wertigkeitsstufen auftreten, insbesondere Metallverbindungen des Kobalts, Mangans oder Eisens. Bei den Carbonsäuren handelt es sich um monomere oder polymere Carbonsäuren, vorzugsweise ethylenisch ungesättigte Mono- oder Dicarbonsäuren wie Acrylsäure, Methacrylsäure und Maleinsäure. Anstelle der freien Carbonsäure kann auch ein hydrolysierbares Derivat eingesetzt werden, z.B. deren Anhydride.

In den deutschen Offenlegungsschriften DE 40 00 776 und DE 41 23 194 werden unter Luftabschluß lagerstabile radikalisch polymerisierbare Mehrstoffgemische aus olefinisch ungesättigten Verbindungen beschrieben, die Hydrazone als Starter enthalten. Die Hauptkomponente des Starters sind Alkyl-, Cycloalkyl-, Aryl-Hydrazone aliphatischer, cycloaliphatischer oder aromatischer Aldehyde oder Ketone, die zur Ausbildung von Hydroperoxiden befähigt sind. Vorzugsweise enthält das Startersystem auch noch lösliche Metallverbindungen, wie sie zur Trocknung von ungesättigten Ölen verwendet werden, z.B. Verbindungen des Kupfers oder Mangans, insbesondere des 2- oder 3-wertigen Eisens. Ferner können noch Reduktionsmittel mit Beschleunigerwirkung für die radikalische Polymerisation vorliegen, z.B. Hydroxyketone.

In der DE 43 30 354 bzw. der WO-A-950734 (Art. 54(3) EPÜ gemäß Art. 158 EPÜ) werden radikalisch polymerisierbare Zusammensetzungen aus olefinisch ungesättigten Verbindungen beschrieben, die bei Luftzutritt aufgrund der Gegenwart von bestimmten Furanonen polymerisieren. Auch hier wirken lösliche Metallverbindungen als Aktivator, insbesondere Eisen, Kobalt und Mangan.

In der EP 0 611 813 A1 (Art. 54(3) EPÜ) wird eine luftaktivierbare polymerisierbare Zusammensetzung mit Onium-Salzen als Aktivatoren beschrieben. Bei den polymerisierbaren Monomeren handelt es sich um olefinisch ungesättigte Systeme. Als Beispiele werden unter anderem Vinyl-terminierte Harze genannt. Verbindungen mit anderen reaktiven Gruppen als diesen olefinisch ungesättigten Doppelbindungen werden nicht genannt.

In der EP 0 078 994 A1 wird ein durch Luftzutritt aktivierbares Startersystem für die Polymerisation olefinischer Verbindungen beschrieben. Von weiteren reaktiven Gruppen ist ebenfalls keine Rede.

Das gleiche gilt für die EP 0 502 733 A1.

Diese bekannten aeroben Klebstoffe ergeben in kurzer Zeit brauchbare Verklebungen. Es gibt jedoch auch Anwendungen, bei denen höhere Festigkeiten sowohl am Anfang der Verklebung als auch nach der Aushärtung gefordert werden.

Die erfindungsgemäße Aufgabe besteht demnach darin, das Eigenschaftsniveau der aeroben Klebstoffe anzuheben, insbesondere bezüglich der Endfestigkeit, aber auch bezüglich der Frühfestigkeit.

Die erfindungsgemäße Lösung ist den Patentansprüchen zu entnehmen. Demnach soll der einkomponentige Reaktionsklebstoff auf der Basis eines aeroben Klebstoffes mit einem luftaktivierbaren Initiatorsystem (Komponente A) und mit radikalisch polymerisierbaren olefinisch ungesättigten Monomeren (Komponente B) kennzeichnungsgemäß zusätzlich Isocyanat- und/oder Silan-Gruppen enthalten. Die Erfindung besteht im wesentlichen darin, daß der Klebstoff als weitere aktive Gruppen Isocyanat- und/oder Silan-Gruppen enthält. Diese zusätzlichen funktionellen Gruppen können entweder direkt chemisch mit den radikalisch polymerisierbaren olefinisch ungesättigten Monomeren verbunden sein oder sie können davon unabhängige Verbindungen bilden. Im letzten Fall handelt es sich um Verbindungen, die von den Einkomponenten-Polyurethan-Klebstoffen bekannt sind. Hierbei handelt es sich um feuchtigkeitsvernetzende Systeme aus Polyisocyanaten. Sie werden üblicherweise aus höhermolekularen Polyolen mit einem stöchiometrischen Überschuß an Isocyanat hergestellt (sogenannte Isocyanato-Polyurethane). Ebenfalls bekannt ist es, derartige Polyisocyanat-Verbindungen mit Alkoxysilan-Verbindungen zu den Alkoxysilan-terminierten Polyurethanen umzusetzen. Dabei können die NCO-Gruppen mehr oder weniger vollständig gegen Silangruppen ausgetauscht werden. Derartige Monomere sowie ihre Verwendung in reaktiven Klebstoffen ist bekannt.

Alkoxysilan-terminierte feuchtigkeitshärtende Polyurethane sind z.B. in der DE 36 29 237 beschrieben. Zu ihrer Herstellung werden zunächst OH-terminierte Di- und/oder Triole mit Diisocyanaten zu NCO-terminierten Polyurethanen mit einer NCO-Funktionalität von mindestens 2 umgesetzt. Danach wird ein Teil der NCO-Gruppen in aliphatischen Alkoholen zu einem Polyurethan mit einer NCO-Funktionalität von mindestens 1 und weniger als 2 umgesetzt. Schließlich werden die noch verbliebenen NCO-Gruppen mit Aminoalkyl-, Mercaptoalkyl- oder Epoxyalkyl-Alkoxysilanen umgesetzt.

Entsprechende feuchtigkeitshärtende Alkoxysilan-terminierte Polyurethane sind auch Gegenstand der DE 40 29 505. Die Silan-Verbindungen haben die allgemeine Formel

X-(CH₂)ₙ-Si(R)-(OR¹)₂ (I).

- X: ist dabei eine sekundäre Aminogruppe oder eine Alkoxygruppe mit 1 bis 10 C-Atomen. Bevorzugte Verbindungen sind: (β-Aminoethyl)trimethoxysilan, (γ-Aminopropyl)trimethoxysilan, (β-Aminoethyl)methyldimethoxysilan, (γ-Aminopropyl)methyldimethoxysilan, (β-Aminopropyl)triethoxysilan, (γ-Aminopropyl)triethoxysilan, (β-Aminoethyl)methyldiethoxysilan und (γ-Aminopropyl)methyldiethoxysilan.

Weitere Einzelheiten zu den Polyolen, Polyisocyanaten und deren Umsetzung zu den Alkoxysilan-terminierten Polyurethanen sind den zitierten Offenlegungsschriften DE 40 29 505 und 40 29 504 zu entnehmen. Ihr diesbezüglicher Inhalt wird ausdrücklich auch zum Gegenstand dieser Anmeldung gemacht.

Auch die radikalisch polymerisierbaren olefinisch ungesättigten Monomeren sind bekannt (siehe z.B. die im Stand der Technik zitierten Dokumente sowie DE 43 40 239 und DE 43 40 095). Es handelt sich dabei im wesentlichen um Acrylat- oder Methacrylat-Verbindungen, Acrylnitril und Styrol sowie seine Derivate. Neben den niedermolekularen Monomeren kommen auch höhermolekulare in Frage, die ihrerseits durch eine Polyreaktion entstanden sind, z.B. acrylterminierte Polyester. Bevorzugt sind Acrylsäure bzw. Methacrylsäure und deren Derivate wie Ester und Amide mit 1 bis 25 C-Atomen als Komponente B).

Vorzugsweise entsteht bei der radikalischen Polymerisation zunächst ein Haftklebstoff. Zur Erzielung haftklebriger Eigenschaften werden Acrylsäureester mit 1 bis 25 C-Atomen besonders bevorzugt. Bei Einsatz geeigneter Monomeren erhält man eine Schicht mit kontaktklebrigen Eigenschaften.
Zweckmäßigerweise werden als luftaktivierbare Initiatorsysteme Hydrazone oder Dihydropyridine eingesetzt.

Bei der Auswahl der konkreten Komponenten aus der Gruppe der radikalisch polymerisierbaren Monomeren, der luftaktivierbaren Initiatorsysteme, der Isocyanat- und der Silan-Verbindungen ist natürlich die Lagerstabilität zu beachten. So sind bei der Kombination von Hydrazon-Startern und Isocyanat-Nachhärtung lediglich tertiäre aliphatische Isocyanate zu verwenden, z.B. Umsetzungsprodukte von TMXDI. Bei den anderen Initiatorsystemen ohnen aktiven Wasserstoff ist keine derartige Beschränkung vorhanden.

Ähnlich sorgfältig müssen die Additive ausgesucht werden, also z.B. Stabilisatoren, Hilfsmittel und Füllstoffe. Die Auswahlregeln sind dem Klebstoffchemiker bekannt. Das gilt insbesondere für Katalysatoren für die NCO- oder Silan-Nachhärtung, z.B. Sn-Verbindungen.

Zweckmäßig sind folgende Additive: Stabilisatoren, Hilfsmittel, Füllstoffe und Katalysatoren.
Vorzugsweise ist der erfindungsgemäße Reaktionsklebstoff durch folgende Zusammensetzung gekennzeichnet:
A) 0,2 bis 15, vorzugsweise 1 bis 10 Gew.-% an luftaktivierbarem Initiatorsystem,
B) 20 bis 99,6, vorzugsweise 40 bis 80 Gew.-% an radikalisch polymerisierbaren Monomeren,
C) 0,2 bis 10, vorzugsweise 1 bis 7 Gew.-% an Isocyanat und/oder Silan-Gruppen und
D) 0 bis 50, vorzugsweise 0,01 bis 40 Gew.-% an Additiven, jeweils bezogen auf den Klebstoff insgesamt.

Auf diese Weise gelingt es, lagerstabile einkomponentige Reaktionsklebstoffe herzustellen, die durch 2 verschiedene zeitlich versetzt ablaufende chemische Reaktionen aushärten. Durch die schnellere Reaktion wird ein bestimmtes gewünschtes vorläufiges Eigenschaftsprofil erzielt. Durch die langsamere zweite Reaktion (Nachhärtung) wird das Eigenschaftsniveau deutlich erhöht. Das gilt insbesondere für die Endfestigkeit, die Wärmestandfestigkeit, die Lösungsmittelbeständigkeit und die Wasserbeständigkeit. Die Lagerstabilität beträgt > 2 Monate. Sie wurde bestimmt, indem die Viskosität der Formulierungen überprüft wird.

Überraschenderweise wird bei Kombination der beiden Härtungsmechanismen ein schnellerer Festigkeitsaufbau beobachtet als bei Einsatz der zur Nachhärtung verwendeten Komponente alleine.

Folgende Beispiele sollen zur Verdeutlichung der Erfindung dienen:

### I. Herstellung der Prepolymere:

1.) In einem 1-1-Dreihalskolben mit KPG-Rührer, Innenthermometer und Rückflußkühler werden unter Stickstoff 220 g (0,4 mol) CAPA 305 (Polycaprolactontriol der Fa. Solvay) und 293 g (1,2 mol)1,3-Bis(1-isocyanato-1-methylethyl)-benzol (TMXDI, aliph. Diisocyanat der Fa. American Cyanamide) gemischt und für 2 h auf 110°C erhitzt, bis der theoretische NCO-Gehalt von 9,83 % erreicht ist.
2.) In einer Apparatur wie unter 1) beschrieben, werden 616 g (0,15 mol) PPU 2404 (Makrotriol auf Basis Propylenoxid der Fa. DOW) und 110 g (0,45 mol) TMXDI gemischt und auf 110°C erhitzt. Nach 1 h werden 0,05 % Dibutylzinndilaurat (DBTL) zugegeben und die Reaktionsmischung für weitere 2 h erhitzt, bis der theoretische NCO-Gehalt von 2,6 % erreicht ist.
3.) In einer Apparatur wie unter 1) beschrieben, werden 275 g (0,8 mol) Dianol 320 (propoxyliertes Bisphenol A der Fa. Akzo) und 293 g (1,2 mol) TMXDI gemischt und auf 100°C erwärmt. Nach 1 h werden 0,05 % DBTL zugegeben und solange erhitzt, bis der theoretische NCO-Gehalt von 5,9 % erreicht ist.
4.) In einer Apparatur wie unter 1) beschrieben, werden 200 g PTHF 2000 (Polytetrahydrofurfuryldiol der Fa. BASF) vorgelegt und auf 80°C erhitzt. Dazu werden 35 g (0,2 mol) 2,4-Toluendiisocyanat (Desmodur & 100 der Fa. Bayer) und 0,01 % DBTL zugegeben und solange erhitzt, bis der theoretische NCO-Gehalt von 3,58 % erreicht ist. Dann werden 35,4 (0,198 mol) 3-Aminopropyltrimethoxysilan zugegeben und solange erhitzt, bis der NCO-Gehalt < 0,1 % ist.
5.) In einer Apparatur wie Beispiel 1.) beschrieben, werden 390 g (1,6 mol) TMXDI und 186 g (1,6 mol) 2-Hydroxyethylacrylat gemischt und solange auf 85°C erhitzt, bis der NCO-Gehalt den theoretischen Wert von 11,7 % erreicht hat.

### II. Klebstofformulierungen

(T = Gewichtsteile)

### Klebstofformulierung A

50 T silanterminiertes Prepolymer nach Beispiel 4
40 T Methylmethacrylat
10 T Methacrylsäure
5 T DHP (= Dihydropyridin)
350 ppm Fe(acac)₃ (= Acetylacetonat)

### Klebstofformulierung B

50 T silanterminiertes Prepolymer nach Beispiel 4
50 T Hydroxypropylmethacrylat
4 T Acetophenon-t-butylhydrazon
1,2 T Fe(acac)₃
750 ppm J₂

### Klebstofformulierung C

50 T NCO-haltiges Prepolymer nach Beispiel 1
50 T Benzylmethacrylat
4 T Acetophenon-t-butylhydrazon
1,2 T Fe(acac)₃
750 ppm J₂

### Klebstofformulierung D

38,5 T Dynacoll A 3151 (acrylterminierter Polyester der Fa. Hüls)
38,5 T n-Butylacrylat
23 T NCO-haltiges Prepolymer nach Beispiel 1
4 T Acetophenon-t-butylhydrazon
1,2 T Fe(acac)₃
750 ppm J₂

### Klebstofformulierung E

38,5 T Dynacoll A 3151 (acrylterminierter Polyester der Fa. Hüls)
38,5 T n-Butylacrylat
23 T NCO-haltiges Prepolymer nach Beispiel 2
4 T Acetophenon-t-butylhydrazon
1,2 T Fe(acac)₃
750 ppm J₂

### Klebstofformulierung F

38,5 T Dynacoll A 3151 (acrylterminierter Polyester der Fa. Hüls)
38,5 T n-Butylacrylat
23 T NCO-haltiges Prepolymer nach Beispiel 3
4 T Acetophenon-t-butylhydrazon
1,2 T Fe(acac)₃
750 ppm J₂

### Klebstofformulierung G

38,5 T Dynacoll A 3151 (acrylterminierter Polyester der Fa. Hüls)
38,5 T Phenoxyethylacrylat
23 T NCO-haltiges Prepolymer nach Beispiel 2
4 T Acetophenon-t-butylhydrazon
1,2 T Fe(acac)₃
750 ppm J₂

### Klebstofformulierung H

20 T Dynacoll A 3151 (acrylterminierter Polyester der Fa. Hüls)
50 T n-Butylacrylat
30 T silanhaltiges Prepolymer nach Beispiel 4
4 T Acetophenon-t-butylhydrazon
1,2 T Fe(acac)₃
750 ppm J₂

### Klebstofformullierung I

30 T Dynacoll A 3151 (acrylterminierter Polyester der Fa. Hüls)
50 T n-Butylacrylat
20 T silanhaltiges Prepolymer nach Beispiel 4
5 T 1 -Phenyl-2-propyl-3,5-diethyl-1,2-dihydropyridin
5 T Methacrylsäure
50 ppm Fe(acac)₃

### Beispiel J

26 T Dynacoll A 3151 (acrylterminierter Polyester der Fa. Hüls)
26 T Prepolymer nach Beispiel 1
30 T n-Butylacrylat
17,5 T NCO-funktionelles Monomer nach Beispiel 5
4 T Acetophenon-t-butylhydrazon
1,2 T Fe(acac)₃
750 ppm J₂

### Vergleichsbeispiele:

### Beispiel K (nur aerobe Komponente)

50 T Dynacoll A 3151 (acrylterminierter Polyester der Fa. Hüls)
50 T n-Butylacrylat
4 T Fe(acac)₃
750 ppm J₂

### Beispiel L (nur Prepolymer mit NCO-Gruppen)

Verklebungen werden mit Prepolymer nach Beispiel 1 als feuchtigkeitshärtendem 1 K-Polyurethan-Klebstoff durchgeführt.

### III.Allgemeine Herstellvorschriften für Klebstofformulierungen:

In einem mit N₂ gefüllten Mehrhalskolben wird das Monomere vorgelegt und darin der inhibierende Stabilisator, die Metallverbindung und ggf. notwendige Additive gelöst, wobei auf Ausschluß von Sauerstoff und Feuchtigkeit geachtet wird. Dann wird das NCO- oder silanfunktionelle Prepolymer zugemischt und die Lösung homogenisiert. Die homogene Mischung wird auf -196°C abgekühlt, der Kolben auf 2,6 · 10² N/m² (0,5 Torr) evakuiert und anschließend auf Raumtemperatur erwärmt. Durch mehrmaliges Wiederholen dieses Gefrier/Tau-Zyklus wird restlicher Sauerstoff aus dem System entfernt. Nun wird die sauerstoffempfindliche Initiator-Komponente zugegeben und wiederum wie oben entgast. Das Gemisch wird unter Inertgas aufbewahrt.

### IV. Untersuchungen

Die Proben wurden hergestellt, indem der Klebstoff in einer Dicke von 100 µm auf den Prüfkörper aufgerakelt wurde. Nach einer Luftkontaktzeit von 20 Minuten wurden die zu verklebenden Teile gefügt und für 30 Sekunden mit einem Druck von 70 N/mm² zusammengepreßt. Nach der angegebenen Härtung wurde entweder die Zugscherfestigkeit oder die Oberflächenklebrigkeit untersucht. Dazu wurde der Klebstoff in einer Dicke von 100 µm auf einer PVC-Platte aufgerakelt und nach Luftkontakt sensorisch bewertet (+ = Tack, - = keine Klebrigkeit).

Die Zugscherfestigkeiten werden nach DIN 53281 an einschnittig überlappten (250 mm²) Proben bestimmt und in N/mm² angegeben.

Einzelheiten sind den nachfolgenden Tabellen zu entnehmen:

**Tabelle 1**

| Beispiel | Zugscherfestigkeit (Fe/Fe) | |
|---|---|---|
| | nach 24 h | nach 10 d |
| A | 10,5 | 12,2 |
| B | 11,7 | 12,5 |
| C | 7,6 | 10,1 |

**Tabelle 2**

| Beispiel | Zugscherfestigkeit (Holz/Holz) | | "Tack" | |
|---|---|---|---|---|
| | sofort | nach 1 d | nach 1 h | nach 1 d |
| D | 0,1 | 1,1 | + | - |
| E | 0,1 | 0,6 | + | - |
| F | 0,1 | 2,6 | + | - |

**Tabelle 3**

| Beispiel | Zugscherfestigkeit (Holz/Holz) | |
|---|---|---|
| | sofort | nach 7 Tagen |
| F | 0,8 | 2,6 |
| G | 0,9 | 3,2 |
| H | 0,5 | 3,0 |
| I | 0,2 | 2,4 |
| J | 0,3 | 6,3 |
| K | 0,2 | 0,2 |
| L | 0 | 1,5 |

## Patentansprüche

1. Einkomponentiger Reaktionsklebstoff auf der Basis eines aeroben Klebstoffes mit einem luftaktivierbaren Initiatorsystems (Komponente A) und mit radikalsich polymerisierbaren olefinisch ungesättigten Monomeren (Komponente B), dadurch gekennzeichnet, daß der Klebstoff zusätzlich Isocyanat- und/oder Silan-Gruppen enthält.

2. Reaktionsklebstoff nach Anspruch 1, gekennzeichnet durch Hydrazone oder Dihydropyridine als luftaktivierbare Initiatorsysteme.

3. Reaktionsklebstoff nach Anspruch 1 oder 2, gekennzeichnet durch Acrylsäure bzw. Methacrylsäure und deren Derivate wie Ester und Amide mit 1 bis 25 C-Atomen als Komponente B).

4. Reaktionsklebstoff nach Anspruch 3, dadurch gekennzeichnet, daß bei der radikalischen Polymerisation zunächst ein Haftklebstoff entsteht.

5. Reaktionsklebstoff nach mindestens einem der Ansprüche 1 bis 4, gekennzeichnet durch folgende Additive: Stabilisatoren, Hilfsmittel, Füllstoffe und Katalysatoren.

6. Reaktionsklebstoff nach mindestens einem der Ansprüche 1 bis 5, gekennzeichnet durch folgende Zusammensetzung
A) 0,2 bis 15 Gew.-% an luftaktivierbarem Initiatorsystem,
B) 20 bis 99,6 Gew.-% an radikalisch polymerisierbaren Monomeren,
C) 0,2 bis 10 Gew.-% an Isocyanat- und/oder Silan-Gruppen und
D) 0 bis 50 Gew.-% an Additiven,
jeweils bezogen auf den Klebstoff insgesamt.

7. Reaktionsklebstoff nach Anspruch 6, gekennzeichnet durch folgende Zusammensetzung
A) 1 bis 10 Gew.-% an luftaktivierbarem Initiatorsystem,
B) 40 bis 80 Gew.-% an radikalisch polymerisierbaren Monomeren,
C) 1 bis 7 Gew.-% an Isocyanat- und/oder Silan-Gruppen und
D) 0,01 bis 40 Gew.-% an Additiven, jeweils bezogen auf den Klebstoff insgesamt.

8. Reaktionsklebstoff nach Anspruch 4, dadurch gekennzeichnet, daß bei der radikalischen Polymerisation von Acrylsäureestern mit 1 bis 25 C-Atomen zunächst ein Haftklebstoff entsteht.

## Claims

1. A one-component reactive adhesive based on an aerobic adhesive containing an air-activatable initiator system (component A) and radical-polymerizable olefinically unsaturated monomers (component B), characterized in that the adhesive additionally contains isocyanate and/or silane groups.

2. A reactive adhesive as claimed in claim 1, characterized by hydrazones or dihydropyridines as air-activatable initiator systems.

3. A reactive adhesive as claimed in claim 1 or 2, characterized by acrylic acid or methacrylic acid and derivatives thereof, such as esters and amides containing 1 to 25 carbon atoms, as component B).

4. A reactive adhesive as claimed in claim 3, characterized in that a contact adhesive is initially formed in the radical polymerization.

5. A reactive adhesive as claimed in at least one of claims 1 to 4, characterized by the following additives: stabilizers, auxiliaries, fillers and catalysts.

6. A reactive adhesive as claimed in at least one of claims 1 to 5, characterized by the following composition:
A) 0.2 to 15% by weight of an air-activatable initiator system,
B) 20 to 99.6% by weight of radical-polymerizable monomers,
C) 0.2 to 10% by weight of isocyanate and/or silane groups and
D) 0 to 50% by weight of additives,
based on the adhesive as a whole.

7. A reactive adhesive as claimed in claim 6, characterized by the following composition:
A) 1 to 10% by weight of an air-activatable initiator system,
B) 40 to 80% by weight of radical-polymerizable monomers,
C) 1 to 7% by weight of isocyanate and/or silane groups and
D) 0.01 to 40% by weight of additives,
based on the adhesive as a whole.

8. A reactive adhesive as claimed in claim 4, characterized in that a contact adhesive is initially formed in the radical polymerization of C₁₋₂₅ acrylates.

## Revendications

1. Adhésif de réaction à un composant à base d'un adhésif aérobie avec un système initiateur activable à l'air (composant A) et avec des monomères oléfiniquement insaturés polymérisables par voie radicalaire (composant B),
caractérisé en ce que
l'adhésif contient en outre des groupes isocyanates et/ou silanes.

2. Adhésif de réaction selon la revendication 1,
caractérisé par
l'hydrazone ou la dihydropyridine comme systèmes initiateurs activables à l'air.

3. Adhésif de réaction selon la revendication 1 ou 2,
caractérisé par
l'acide acrylique ou selon les cas l'acide méthacrylique et leurs dérivés comme les esters et les amides avec 1 à 25 atomes de carbone comme composant B.

4. Adhésif de réaction selon la revendication 3,
caractérisé en ce que
dans la polymérisation radicalaire il apparaît tout d'abord un adhésif par contact.

5. Adhésif de réaction selon au moins l'une des revendications 1 à 4,
caractérisé par
les additifs suivants : stabilisateurs, adjuvants, charges et catalyseurs.

6. Adhésif de réaction selon au moins une des revendications 1 à 5,
caractérisé par
la composition suivante
A) 0,2 à 15 % en poids d'un système initiateur activable à l'air,
B) 20 à 99,6 % en poids de monomères polymérisables par voie radicalaire,
C) 0,2 à 10 % en poids de groupes isocyanates et/ou silanes et
D) 0 à 50 % en poids d'additifs,
toujours par rapport à la totalité de l'adhésif

7. Adhésif de réaction selon la revendication 6,
caractérisé par
la composition suivante
A) 1 à 10 % en poids de système initiateur activable à l'air,
B) 40 à 80 % en poids de monomères polymérisables par voie radicalaire,
C) 1 à 7 % en poids de groupes isocyanates et/ou silanes et
D) 0,01 à 40 % en poids d'additifs, toujours par rapport à l'ensemble de l'adhésif

8. Adhésif de réaction selon la revendication 4,
caractérisé en ce que
dans la polymérisation radicalaire des esters d'acide acrylique avec 1 à 25 atomes de carbone, il apparaît tout d'abord un adhésif par contact.
